# FASCICULE DE BREVET EUROPEEN

(11) **EP 4 663 558 B1**
(45) Date de publication et mention de la délivrance du brevet: **17.06.2026**
(21) Numéro de dépôt: 25181820.9
(22) Date de dépôt: 10.06.2025
(51) Int. Cl.: B64G 1/50, F28D 1/04, F28D 21/00

(54) **SATELLITE RÉALISANT UNE CONVECTION FORCÉE D'UN FLUIDE FRIGORIFIQUE AVEC ÉVAPO-CONDENSATION ENTRE PLUSIEURS PANNEAUX STRUCTURAUX ET DES ÉQUIPEMENTS DISSIPATIFS**
SATELLIT MIT ERZWUNGENER KONVEKTION EINES KÜHLFLUIDS MIT VERDAMPFUNGSKONDENSATION ZWISCHEN MEHREREN STRUKTURPLATTEN UND DISSIPATIVEN EINRICHTUNGEN
SATELLITE FOR EFFECTING FORCED CONVECTION OF A REFRIGERATING FLUID WITH EVAPO-CONDENSATION BETWEEN SEVERAL STRUCTURAL PANELS AND DISSIPATIVE EQUIPMENT

(30) Priorité: 10.06.2024 FR 2406087
(43) Date de publication de la demande: 17.12.2025
(73) Titulaire: THALES, 92190 Meudon (FR); Centre National d'Etudes Spatiales, 75001 Paris (FR)
(72) Inventeur: HUGON, Julien, 06156 CANNES LA BOCCA CEDEX (FR)
(74) Mandataire: Lavoix

(56) Documents cités:
- US-A1- 2008 217 483
- US-A1- 2010 223 942
- US-A1- 2013 068 891
- US-A1- 2022 074 674
- US-A1- 2022 364 795

## Description

### DOMAINE

La présente invention concerne un satellite, notamment de télécommunications, par exemple géostationnaire, comprenant une pluralité de panneaux structuraux définissant un volume intérieur du satellite, et des équipements dissipatifs produisant de la chaleur.

L'invention concerne aussi un procédé de contrôle thermique d'un tel satellite.

### ART ANTERIEUR

Lorsque des équipements dissipatifs sont placés sur la face interne d'un panneau structural, il est connu de recourir à des caloducs pour distribuer la chaleur produite sur le panneau structural, qui sert aussi de panneau radiateur. La chaleur est conduite transversalement jusqu'à une face externe du panneau structural, et est évacuée par rayonnement.

Dans le cas d'un satellite géostationnaire, une face dite « nord », en référence à l'axe de rotation terrestre, est éclairée par le soleil constamment en été, et jamais en hiver. Pour la face sud, la situation est inversée. Dit autrement, l'éclairage de ces faces est périodique avec comme période l'année terrestre. Pour les faces est et ouest, situées respectivement du côté du soleil levant et du soleil couchant, l'éclairage s'inverse deux fois par jour. L'éclairage est donc périodique avec comme période un jour terrestre.

De ce fait, il est également connu de coupler thermiquement deux panneaux structuraux radiateurs par des caloducs de couplage (en anglais *caloducs crossing*)*,* par exemple entre les panneaux nord et sud d'un satellite géostationnaire. L'aménagement de caloducs de couplage n'est toutefois pas toujours possible et le couplage thermique entre panneaux radiateurs n'est pas optimal. Ceci limite la capacité du satellite à évacuer la chaleur produite par la charge utile.

Les caloducs réalisent une évaporation (puits de chaleur) et une condensation (source de chaleur) dans une même enceinte. De plus, le dimensionnement et l'aménagement de réseaux de caloducs (réseau primaire et réseau de couplage ou *crossing* en anglais) reste complexe. Leur architecture est peu adaptable à des évolutions de la charge utile (aménagement des équipements, dissipations locales) et les possibilités de couplage sont limitées du fait de l'encombrement interne du satellite.

En fait, le dimensionnement des caloducs est intimement lié à l'aménagement des équipements dans le satellite, qui lui-même tient compte de contraintes thermiques, quitte à dégrader les performances de la chaîne de radiofréquences. Ainsi, toute évolution de cet aménagement ou des propriétés de dissipation des équipements au cours d'un programme de mise au point d'un satellite remet en question l'architecture des caloducs, ce qui a un impact négatif notable sur les coûts et/ou le planning du programme.

Au final, l'architecture des caloducs avec couplage entre panneaux radiateurs est relativement peu efficace, du fait de la difficulté d'aménagement de caloducs de couplage liée à l'encombrement interne du satellite et du besoin d'avoir plusieurs caloducs en série pour palier la distance de transport limitée d'un caloduc, alors que le chemin de couplage entre les panneaux est de l'ordre de plusieurs mètres.

Plus récemment, des boucles à circulation forcée d'un fluide frigorifique ont été mises en oeuvre dans des satellites de télécommunication de forte puissance, cf. US 2022/364795 A1. Ces boucles réalisent une évaporation du fluide au niveau d'une ou plusieurs étagères internes du satellite portant des équipements dissipatifs, puis une condensation du fluide dans des radiateurs dédiés, par exemple déployables, ne supportant pas d'équipement dissipatif. Ceci a permis d'augmenter la capacité du satellite à évacuer la chaleur des équipements dissipatifs.

Toutefois, cette solution n'est pas satisfaisante si la compacité du satellite impose de devoir aménager des équipements dissipatifs sur les panneaux radiateurs eux-mêmes.

Un but de l'invention est de remédier à tout ou partie des inconvénients ci-dessus, en fournissant un satellite à la fois performant du point de vue de l'évacuation de la chaleur générée par les équipements dissipatifs, de façon à pouvoir maximiser la charge utile, tout en étant flexible du point de vue de l'aménagement (la disposition) et/ou de la nature des équipements dissipatifs.

### RESUME DE L'INVENTION

L'invention a pour objet un satellite, notamment de télécommunications, comprenant :
- une pluralité de panneaux structuraux définissant un volume intérieur du satellite, ladite pluralité comprenant au moins deux panneaux radiateurs ayant une face externe adaptée pour rayonner de la chaleur vers l'espace, et une face interne, les deux panneaux radiateurs étant adaptés pour conduire de la chaleur de la face interne à la face externe et présentant des orientations distinctes l'une de l'autre, les orientations étant définies respectivement par la face externe,
- des équipements dissipatifs destinés à produire de la chaleur, et
- une boucle de circulation d'un fluide frigorifique,
la boucle comprenant :
- au moins un système de pompage pour réaliser une convection forcée du fluide dans la boucle,
- au moins un condenseur adapté pour réaliser une condensation au moins partielle, de préférence totale, du fluide, le fluide cédant de la chaleur au condenseur, le condenseur étant adapté pour évacuer ladite chaleur vers l'espace, et
- au moins deux échangeurs thermiques d'évaporation-condensation du fluide, chacun des deux échangeurs thermiques s'étendant respectivement contre la face interne (64) d'un des deux panneaux radiateurs,
chacun des deux échangeurs thermiques comprenant :
- une première partie en contact thermique respectivement avec au moins un des équipements dissipatifs, la première partie étant apte et destinée à recevoir de la chaleur dudit au moins un des équipements dissipatifs par conduction et à céder de la chaleur au fluide par conducto-convection pour vaporiser une fraction du fluide, et
- une deuxième partie en contact thermique avec ladite face interne, la deuxième partie étant apte et destinée à recevoir de la chaleur du fluide par conducto-convection pour condenser une fraction du fluide, la deuxième partie étant apte et destinée à transmettre de la chaleur à la face interne par conduction.

Suivant d'autres aspects avantageux de l'invention, le satellite comprend une ou plusieurs des caractéristiques suivantes, prise(s) isolément ou suivant toutes les combinaisons techniquement possibles :
- le satellite est destiné à être placé sur une orbite géostationnaire, le satellite ayant une face nord et une face sud par rapport à l'axe de rotation terrestre, la face nord et la face sud étant définies respectivement par les deux panneaux radiateurs ;
- la boucle est configurée pour réaliser une circulation du fluide en parallèle dans les deux échangeurs thermiques ;
- chacun des deux échangeurs thermiques comprend une pluralité de canalisations montées en série et/ou en parallèle les unes des autres et adaptées pour être parcourues par le fluide, la première partie et la deuxième partie de chacun deux échangeurs thermique étant formées par des parois des canalisations ;
- plusieurs des équipements dissipatifs sont en contact thermique avec plusieurs des canalisations de chacun des deux échangeurs thermiques ;
- les canalisations sont réparties sur la face interne de chacun des deux panneaux radiateurs ;
- la pluralité de canalisations comprend plusieurs branches montées en parallèle les unes des autres, chacune des branches définissant un parcours sinueux sur la face interne de chacun des deux panneaux radiateurs ;
- la boucle comprend au moins un évaporateur adapté pour céder de la chaleur au fluide et pour vaporiser une fraction du fluide, la chaleur provenant d'un moins un des équipements dissipatifs, ledit au moins un des équipements dissipatifs étant fixé sur une étagère interne du satellite ou compris dans une antenne externe du satellite ; et
- le fluide comprend de l'ammoniac.

L'invention a aussi pour objet un procédé de contrôle thermique d'un satellite tel que décrit ci-dessus, comprenant :
- une production de chaleur par les équipements dissipatifs,
- une convection forcée du fluide dans la boucle par le système de pompage,
- une conduction de chaleur d'au moins un des équipements dissipatifs vers la première partie de chacun des deux échangeurs thermiques,
- une cession de chaleur au fluide par conducto-convection par la première partie de chacun des deux échangeurs thermiques avec vaporisation d'une fraction du fluide, et une réception de chaleur en provenance du fluide par conducto-convection par la deuxième partie de chacun des deux échangeurs thermiques avec condensation d'une fraction du fluide,
- une conduction de chaleur de la deuxième partie de chacun des deux panneaux radiateurs à la face interne, et de la face interne à la face externe, et
- un rayonnement de chaleur par la face externe de chacun des deux panneaux radiateurs vers l'espace.

### BREVE DESCRIPTION DES DESSINS

L'invention apparaîtra plus clairement à la lecture de la description qui va suivre, donnée uniquement à titre d'exemple non limitatif, et faite en référence aux dessins annexés, dans lesquels :
**[****Fig 1****]** la figure 1 est une vue schématique d'un satellite selon l'invention, en orbite autour de la terre,
**[****Fig 2****]** la figure 2 est un diagramme montrant une boucle de circulation de fluide frigorifique du satellite représenté sur la figure 1, ainsi que des panneaux structuraux, dont deux panneaux radiateurs, et des équipements dissipatifs du satellite,
**[****Fig 3****]** la figure 3 est une vue schématique, en perspective, montrant côte-à-côte les deux panneaux radiateurs représentés sur les figures 1 et 2, ainsi que deux échangeurs thermiques de la boucle représentée sur la figure 2, et des équipements dissipatifs en contact thermique avec les deux échangeurs thermiques, et
**[****Fig 4****]** la figure 4 est une vue schématique, en section, montrant un des deux panneaux radiateurs représentés sur les figures 1 à 3, ainsi une portion d'un des deux échangeurs thermiques et des équipements dissipatifs représentés sur la figure 3.

### DESCRIPTION DETAILLEE

### Satellite

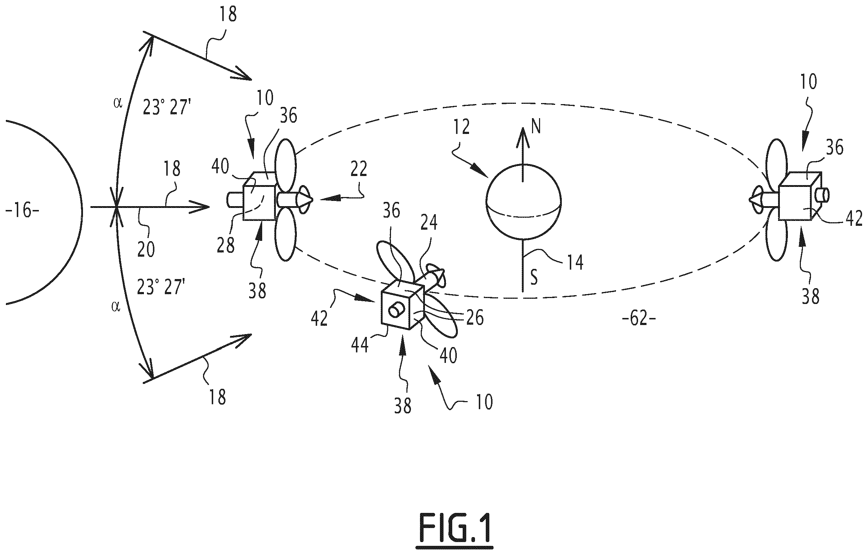

En référence à la figure 1, on décrit un satellite 10 artificiel selon l'invention.

Le satellite 10 est en orbite autour de la Terre 12, dont on a représenté l'axe de rotation propre 14, la Terre se déplaçant autour du Soleil 16 dans le plan de l'écliptique 18.

Le satellite 10 est avantageusement géostationnaire, c'est-à-dire sensiblement fixe dans un repère lié à la Terre. Le satellite 10 se déplace par rapport au Soleil dans un plan équatorial 20 de la Terre, survole un même point de l'équateur terrestre, et présente toujours une même face 22 vers la Terre.

Le satellite 10 est par exemple un satellite de télécommunications, comportant des équipements 24 spécifiques à cette fonction, connus en eux-mêmes et qui ne seront pas détaillés.

Selon des variantes non représentées, le satellite 10 n'est pas géostationnaire et/ou n'est pas un satellite de télécommunications, mais remplit une ou plusieurs missions classiques pour un satellite artificiel en orbite terrestre, telle qu'une mission d'observation.

Selon la période de l'année, le Soleil 16 définit un angle α variable avec le plan équatorial 20, pouvant aller de +23°27' à -23° 27' (angle de l'écliptique).

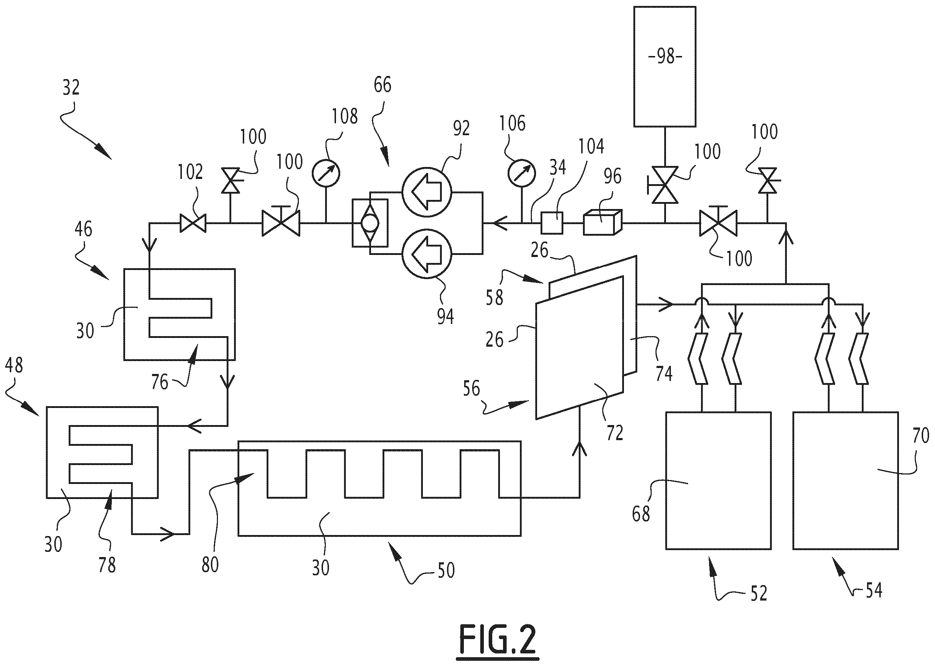

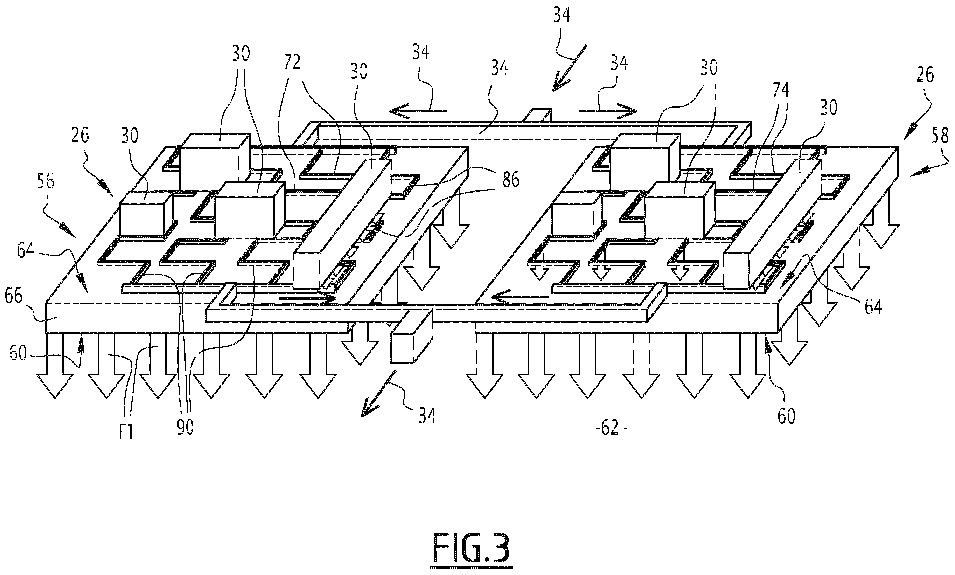

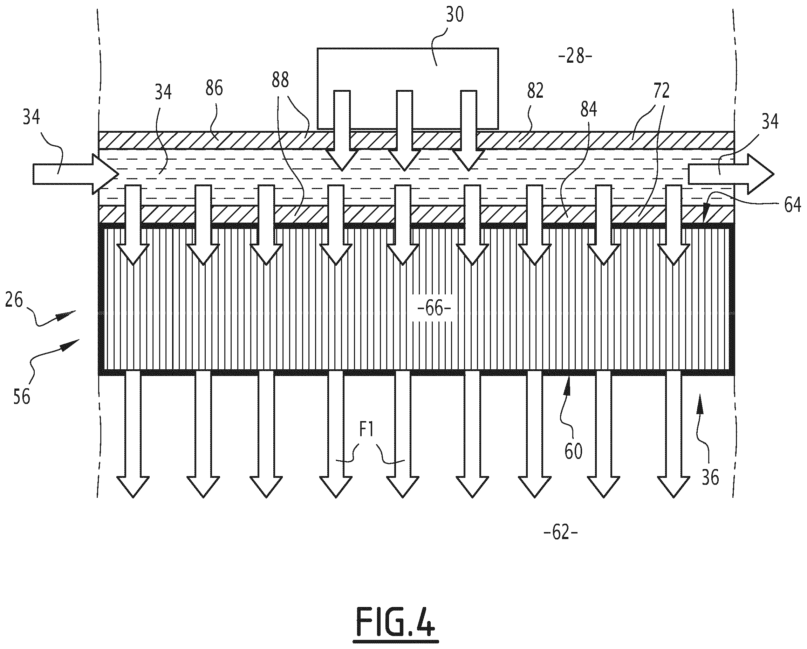

Le satellite 10 comprend une pluralité de panneaux structuraux 26 définissant un volume intérieur 28, des équipements dissipatifs 30 (figures 2 et 3 notamment) produisant de la chaleur lorsqu'ils sont en fonctionnement, et une boucle 32 (figure 2) de circulation d'un fluide 34 frigorifique (figure 4).

Etant géostationnaire dans l'exemple, le satellite 10 possède notamment une face nord 36 (éclairée par le Soleil 16 seulement en été) et une face sud 38 (éclairée seulement en hiver) par rapport à l'axe de rotation terrestre, ainsi qu'une face est 40 (du côté du Soleil 16 en train de se lever) et une face ouest 42 (du côté du Soleil en train de se coucher).

Dans l'exemple, le satellite 10 comprend un corps 44 sensiblement parallélépipédique définissant les faces 22, 36, 38, 40, 42 précitées de manière stricte.

Si le corps 44 n'est pas parallélépipédique, les faces précitées, notamment nord et sud, peuvent être définies par analogie, par exemple comme s'écartant de moins de 20° de faces strictement nord et sud.

Dans l'exemple, le satellite 10 comprend aussi deux étagères 46, 48 (figure 2), une antenne externe 50, et deux radiateurs externes 52, 54 avantageusement déployables par rapport au corps 44.

Selon des variantes (non représentées), le satellite 10 ne comprend qu'un seul radiateur externe, et/ou une seule ou plus de deux étagères.

### Eléments du satellite

Les panneaux structuraux 26 comprennent deux panneaux radiateurs 56, 58, définissant par exemple la face nord 36 et la face sud 38 respectivement.

Selon des variantes non représentées, les panneaux radiateurs 56, 58 sont plus de deux, et/ou définissent d'autres faces que les faces nord et sud.

Comme visible sur la figure 4, chacun des deux panneaux radiateurs 56, 58 possède une face externe 60 adaptée pour rayonner de la chaleur (flèches F1) vers l'espace 62, une face interne 64, et par exemple une structure 66 en nid d'abeilles s'étendant entre la face externe 60 et la face interne 64.

Les deux panneaux radiateurs 56, 58 sont adaptés pour conduire de la chaleur de la face interne 64 à la face externe 60.

Les deux panneaux radiateurs 56, 58 présentent des orientations distinctes l'une de l'autre, définies respectivement par les faces externes 60. Dans l'exemple, les deux panneaux radiateurs 56, 58 sont orientés nord et sud respectivement.

L'antenne externe 50 constitue l'un des équipements dissipatifs 30.

Les étagères 46, 48 s'étendent dans le volume intérieur 28 et portent certains des équipements dissipatifs 30.

Les deux radiateurs externes 52, 54 sont adaptés pour évacuer de la chaleur dans l'espace 62.

### Boucle

La boucle 32 comprend un système de pompage 66, deux condenseurs 68, 70 par exemple formés par les deux radiateurs externes 52, 54, et deux échangeurs thermiques 72, 74 d'évaporation-condensation du fluide 34, chacun des deux échangeurs thermiques s'étendant respectivement contre la face interne 64 d'un des deux panneaux radiateurs 56, 58.

Avantageusement, la boucle 32 comprend trois évaporateurs 76, 78, 80 compris par exemple dans les deux étagères 46, 48 et dans l'antenne externe 50.

Selon des variantes non représentées, la boucle 32 comprend un seul condenseur ou plus de deux condenseurs.

Selon des variantes non représentées, la boucle 32 comprend un, ou deux, ou plus de trois évaporateurs.

Selon d'autres variantes encore, la boucle 32 comprend plus de deux échangeurs thermiques d'évaporation-condensation, par exemple situés sur la face interne d'autres panneaux radiateurs.

La boucle 32 est avantageusement configurée pour réaliser une circulation du fluide 34 en parallèle dans les deux échangeurs thermiques 72, 74 (figure 3).

Selon une variante non représentée, la circulation se fait en série dans les deux échangeurs thermiques 72, 74.

Avantageusement, le ou les condenseurs 68, 70 se situent en aval (du point de vue de la circulation du fluide 34) des deux échangeurs thermiques 72, 74, eux-mêmes situés en aval du ou des évaporateurs 76, 78, 80.

Le système de pompage 66 est adapté pour réaliser une convection forcée du fluide 34 dans la boucle 32, notamment dans les échangeurs thermiques 72, 74.

Les évaporateurs 76, 78, 80 sont adaptés pour céder de la chaleur au fluide 34 et pour vaporiser une fraction du fluide 34, la chaleur provenant des équipements dissipatifs 30 concernés, dans l'exemple l'antenne externe 50 et ceux situés sur les étagères 46, 48.

Le fluide 34 est adapté pour être diphasique dans une gamme de pressions et une gamme de températures correspondant à un fonctionnement normal du satellite 10.

Avantageusement, le fluide 34 est diphasique dès son entrée dans les échangeurs thermiques 72, 74.

Le fluide 34 comprend par exemple de l'ammoniac, avantageusement à au moins 95% en masse.

Les condenseurs 68, 70 sont adaptés pour réaliser une condensation au moins partielle, de préférence totale, du fluide 34, le fluide 34 cédant de la chaleur aux condenseurs, les condenseurs étant adaptés pour évacuer ladite chaleur vers l'espace 62.

### Echangeurs thermiques

Les deux échangeurs thermiques 72, 74 sont avantageusement analogues entre eux.

Chacun des deux échangeurs thermiques 72, 74 comprend une première partie 82 (figure 4) en contact thermique respectivement avec au moins un des équipements dissipatifs 30, et une deuxième partie 84 en contact thermique avec la face interne 64 de l'un des deux panneaux radiateurs 56, 58.

Chacun des deux échangeurs thermiques 72, 74 comprend par exemple une pluralité de canalisations 86 montées en série et/ou en parallèle les unes des autres et adaptées pour être parcourues par le fluide 34, la première partie 82 et la deuxième partie 84 de chacun deux échangeurs thermiques 72, 74 étant formées par des parois 88 des canalisations 86.

La première partie 82 est apte et destinée à recevoir de la chaleur dudit au moins un des équipements dissipatifs 30 par conduction, et à céder de la chaleur au fluide 34 par conducto-convection de manière à vaporiser une fraction du fluide 34.

La deuxième partie 84 est apte et destinée à recevoir de la chaleur du fluide 34 par conducto-convection de manière à condenser une fraction du fluide 34, et à transmettre de la chaleur à la face interne 64 par conduction.

Les canalisations 86 sont avantageusement réparties sur la face interne 64 de chacun des deux panneaux radiateurs 56, 58.

La pluralité de canalisations 86 comprend par exemple plusieurs branches 90 (figure 3) montées en parallèle les unes des autres, chacune des branches définissant par exemple un parcours sinueux sur la face interne 64 de chacun des deux panneaux radiateurs 56, 58. Les canalisations 86 serpentent avantageusement sur la face interne 64, dans l'exemple en formant des angles droits.

Avantageusement, plusieurs des équipements dissipatifs 30 sont en contact thermique avec plusieurs des canalisations 86 des deux échangeurs thermiques 72, 74, par exemple en étant à cheval sur plusieurs branches 90.

### Système de pompage

Le système de pompage 66 comprend par exemple des pompes 92, 94 commandées électroniquement, un filtre à particules 96, et un réservoir d'appoint 98.

Le système de pompage 66 comprend une pluralité de vannes, par exemple des vannes manuelles 100 et une vanne d'étranglement 102.

Avantageusement, le système de pompage 66 comprend un capteur de température 104, et deux capteurs de pression 106, 108 situés en amont et en aval des pompes 92, 94.

En variante (non-représentée), le système de pompage 66 ne comprend qu'une seule pompe.

### Fonctionnement

Le fonctionnement du satellite 10 découle de sa structure et va maintenant être brièvement décrit pour illustrer un procédé selon l'invention.

Si l'on est en été, la face nord 36 du satellite 10 est éclairée par le Soleil 16, tandis que la face sud 38 est à l'ombre.

Les équipements dissipatifs 30 sont en fonctionnement et produisent de la chaleur.

Le système de pompage 66 provoque une convention forcée du fluide 34 dans la boucle 32.

Le fluide 34 est partiellement vaporisé dans les évaporateurs 76, 78, 80 disposés sur les étagères 46, 48 et dans l'antenne externe 50, ce qui absorbe de la chaleur générée par certains des équipements dissipatifs 30.

Le fluide 34 entre dans chacun des deux échangeurs thermiques 72, 74, alors qu'il est avantageusement déjà diphasique.

Dans chacun des deux échangeurs thermiques 72, 74, la première partie 82 reçoit, par conduction, de la chaleur du ou des équipements dissipatifs 34 avec lesquels elle est en contact thermique.

La première partie 82 cède de la chaleur au fluide 34 par conducto-convection et cela vaporise une fraction du fluide 34. La deuxième partie 84 reçoit de chaleur du fluide 34 par conducto-convection et cela condense une fraction du fluide 34.

On note que le fluide 34 est, de manière concomitante, partiellement vaporisé par la première partie 82 et partiellement condensé par la deuxième partie 84, ce qui crée un transfert de chaleur de la première partie 82 vers la deuxième partie 84 via le fluide 34.

Le fluide 34 emporte de la chaleur hors des deux échangeurs thermiques si son titre vapeur augmente lors de son passage dans les échangeurs thermiques 72, 74. Inversement, le fluide 34 apporte de la chaleur aux échangeurs thermiques 72, 74 si son titre vapeur diminue lors de son passage.

La face interne 64 de chacun des deux panneaux radiateurs 56, 58 reçoit de la chaleur de la deuxième partie 84 par conduction, et de la chaleur est conduite de la face interne 64 à la face externe 60.

De la chaleur est rayonnée (flèches F1) vers l'espace 62 par la face externe 60 de chacun des deux panneaux radiateurs 56, 58.

Le fluide 34 est au moins partiellement, de préférence totalement, condensé dans les deux condenseurs 68, 70 avant de retourner dans le système de pompage 66.

### Avantages

Grâce aux caractéristiques décrites ci-dessus, le satellite 10 est à la fois performant du point de vue de l'évacuation de la chaleur générée par les équipements dissipatifs 30, de façon à pouvoir maximiser la charge utile, tout en étant flexible du point de vue de l'aménagement ou de la nature de ces équipements dissipatifs.

En effet, les deux panneaux structuraux 26 nord et sud dans l'exemple deviennent des panneaux radiateurs 56, 58 capables de servir de support à certains des équipements dissipatifs 30. La boucle 32 établit avantageusement un couplage thermique entre les deux panneaux radiateurs 56, 58, ce qui permet de bénéficier des conditions thermiques avantageuses (températures basses) qui règnent dans au moins l'un d'entre eux (face nord en hiver par exemple).

Chacun des échangeurs thermiques 72, 74 réalise une évaporation et une condensation au niveau d'un même panneau radiateur 56, 58, comme un réseau primaire de caloducs, mais avec un fluide 34 circulant en mode convection forcée et non par capillarité, ce qui augmente l'efficacité des échanges thermiques et la flexibilité.

Les échangeurs thermiques 72, 74 sont reliés entre eux selon une stratégie série ou parallèle cohérente des contraintes hydrauliques (limitation des pertes de charge). Les débits massiques par unité de surface, qui peuvent être choisi bien plus élevés que dans un caloduc, garantissent de bons échanges thermique par évaporation et par condensation.

Chacun des échangeurs thermiques 72, 74 assure par évaporation des prélèvements locaux de puissance au niveau des équipements dissipatifs 30 et assure par condensation un rejet régulier de ces différentes sources de chaleur tout au long du cheminement du fluide 34 au contact de chacun des panneaux radiateurs 56, 58. Les équipements dissipatifs 30 peuvent être aménagés librement au contact de chacun des échangeurs thermiques 72, 74, quitte en être concentrés sur une zone pour des besoins en radiofréquence, et déplacés au fil de la vie du programme d'élaboration du satellite 10. La flexibilité ainsi obtenue vis-à-vis de l'aménagement des équipements dissipatifs 30 constitue un avantage fondamental.

L'invention permet d'équiper deux panneaux structuraux et radiateurs 56, 58 voyant des environnements différents, avantageusement les panneaux nord et sud d'un satellite de télécommunications, et de coupler hydrauliquement ces réseaux, avantageusement en parallèle, afin de tirer la capacité de rejet de chaleur de l'ensemble à son maximum. Chaque panneau radiateur 56, 58 n'est plus dimensionné indépendamment des autres en considérant son environnement externe le pire (par exemple face au Soleil, ou constamment éclairé), mais en prenant un cas moyen plus favorable (par exemple, un des panneaux est à l'ombre alors que l'autre est face au Soleil).

Avantageusement, le fluide 34 peut rester dans des états assez voisins entre l'entrée et la sortie des échangeurs thermiques 72, 74, notamment s'ils sont montés en parallèle l'un de l'autre, le débit de fluide 34 étant alors un vecteur pour les échanges par évaporation et condensation qui se compensent plus ou moins.

En outre, il est tout à fait envisageable d'avoir une répartition dissymétrique des équipements dissipatifs 30 au sein d'un des panneaux radiateurs 56, 58 et entre eux, ce qui n'est pas le cas avec des caloducs. En effet, la circulation dans les échangeurs thermiques 72, 74 permet de mieux distribuer la chaleur au sein d'un panneau radiateur et une plus grande quantité de vapeur peut être produite dans un des panneaux par rapport à l'autre (ou aux autres).

En outre, l'ajout ou la suppression d'un des équipements dissipatifs 30 ou l'augmentation de son niveau de dissipation affecte peu le fonctionnement thermique global et le dimensionnement général du satellite 10, ce qui n'est pas le cas avec un réseau de caloducs.

## Revendications

1. Satellite (10), notamment de télécommunications, comprenant :
- une pluralité de panneaux structuraux (26) définissant un volume intérieur (28) du satellite (10), ladite pluralité comprenant au moins deux panneaux radiateurs (56, 58) ayant une face externe (60) adaptée pour rayonner de la chaleur vers l'espace (62), et une face interne (64), les deux panneaux radiateurs (56, 58) étant adaptés pour conduire de la chaleur de la face interne (64) à la face externe (60) et présentant des orientations distinctes l'une de l'autre, les orientations étant définies respectivement par la face externe (60),
- des équipements dissipatifs (30) destinés à produire de la chaleur, et
- une boucle (32) de circulation d'un fluide (34) frigorifique,
la boucle (32) comprenant :
- au moins un système de pompage (66) pour réaliser une convection forcée du fluide (34) dans la boucle (32),
- au moins un condenseur (68) adapté pour réaliser une condensation au moins partielle, de préférence totale, du fluide (34), le fluide (34) cédant de la chaleur au condenseur (68), le condenseur (68) étant adapté pour évacuer ladite chaleur vers l'espace (62), **caractérisé en ce que** la boucle (32) comprend en outre:
- au moins deux échangeurs thermiques (72, 74) d'évaporation-condensation du fluide (34), chacun des deux échangeurs thermiques (72, 74) s'étendant respectivement contre la face interne (64) d'un des deux panneaux radiateurs (56, 58),
chacun des deux échangeurs thermiques (72, 74) comprenant :
- une première partie (82) en contact thermique respectivement avec au moins un des équipements dissipatifs (30), la première partie (82) étant apte et destinée à recevoir de la chaleur dudit au moins un des équipements dissipatifs (30) par conduction et à céder de la chaleur au fluide (34) par conducto-convection pour vaporiser une fraction du fluide (34), et
- une deuxième partie (84) en contact thermique avec ladite face interne (64), la deuxième partie (84) étant apte et destinée à recevoir de la chaleur du fluide (34) par conducto-convection pour condenser une fraction du fluide (34), la deuxième partie (84) étant apte et destinée à transmettre de la chaleur à la face interne (64) par conduction.

2. Satellite (10) selon la revendication 1, destiné à être placé sur une orbite géostationnaire, le satellite (10) ayant une face nord (36) et une face sud (38) par rapport à l'axe de rotation terrestre (14), la face nord (36) et la face sud (38) étant définies respectivement par les deux panneaux radiateurs (56, 58).

3. Satellite (10) selon la revendication 1 ou 2, dans lequel la boucle (32) est configurée pour réaliser une circulation du fluide (34) en parallèle dans les deux échangeurs thermiques (72, 74).

4. Satellite (10) selon l'une quelconque des revendications 1 à 3, dans lequel chacun des deux échangeurs thermiques (72, 74) comprend une pluralité de canalisations (86) montées en série et/ou en parallèle les unes des autres et adaptées pour être parcourues par le fluide (34), la première partie (82) et la deuxième partie (84) de chacun deux échangeurs thermiques (72, 74) étant formées par des parois (88) des canalisations (86).

5. Satellite (10) selon la revendication 4, dans lequel plusieurs des équipements dissipatifs (30) sont en contact thermique avec plusieurs des canalisations (86) de chacun des deux échangeurs thermiques (72, 74).

6. Satellite (10) selon la revendication 4 ou 5, dans lequel les canalisations (86) sont réparties sur la face interne (64) de chacun des deux panneaux radiateurs (56, 58).

7. Satellite (10) selon l'une quelconque des revendications 4 à 6, dans lequel la pluralité de canalisations (86) comprend plusieurs branches (90) montées en parallèle les unes des autres, chacune des branches (90) définissant un parcours sinueux sur la face interne (64) de chacun des deux panneaux radiateurs (56, 58).

8. Satellite (10) selon l'une quelconque des revendications 1 à 7, dans lequel la boucle (32) comprend au moins un évaporateur (76) adapté pour céder de la chaleur au fluide (34) et pour vaporiser une fraction du fluide (34), la chaleur provenant d'un moins un des équipements dissipatifs (30), ledit au moins un des équipements dissipatifs (30) étant fixé sur une étagère (46, 48) interne du satellite (10) ou compris dans une antenne externe (50) du satellite.

9. Satellite (10) selon l'une quelconque des revendications 1 à 8, dans lequel le fluide (34) comprend de l'ammoniac.

10. Procédé de contrôle thermique d'un satellite (10) selon l'une quelconque des revendications 1 à 9, comprenant :
- une production de chaleur par les équipements dissipatifs (30),
- une convection forcée du fluide (34) dans la boucle (32) par le système de pompage (66),
- une conduction de chaleur d'au moins un des équipements dissipatifs (30) vers la première partie de chacun des deux échangeurs thermiques (72, 74),
- une cession de chaleur au fluide (34) par conducto-convection par la première partie (82) de chacun des deux échangeurs thermiques (72, 74) avec vaporisation d'une fraction du fluide (34), et une réception de chaleur en provenance du fluide (34) par conducto-convection par la deuxième partie (84) de chacun des deux échangeurs thermiques (72, 74) avec condensation d'une fraction du fluide (34),
- une conduction de chaleur de la deuxième partie (84) de chacun des deux panneaux radiateurs (56, 58) à la face interne (64), et de la face interne (64) à la face externe (60), et
- un rayonnement de chaleur par la face externe (60) de chacun des deux panneaux radiateurs (56, 58) vers l'espace.

## Patentansprüche

1. Satellit (10), insbesondere für Telekommunikation, umfassend:
- eine Vielzahl von Strukturplatten (26), die ein Innenvolumen (28) des Satelliten (10) definieren, die Vielzahl umfassend mindestens zwei Kühlplatten (56, 58), die eine Außenseite (60), die angepasst ist, um Wärme in den Raum (62) abzustrahlen, und eine Innenseite (64) aufweisen, wobei die zwei Kühlplatten (56, 58) angepasst sind, um die Wärme von der Innenseite (64) zu der Außenseite (60) zu leiten, und voneinander verschiedene Ausrichtungen aufweisen, wobei die Ausrichtungen jeweils durch die Außenseite (60) definiert sind,
- dissipative Einrichtungen (30), die dazu bestimmt sind, Wärme zu erzeugen, und
- eine Schleife (32) zur Zirkulation eines Kühlfluids (34),
die Schleife (32) umfassend:
- mindestens ein Pumpsystem (66), um eine erzwungene Konvektion des Fluids (34) in der Schleife (32) zu realisieren,
- mindestens einen Kondensator (68), der angepasst ist, um eine zumindest teilweise, vorzugsweise vollständige Kondensation des Fluids (34) zu realisieren, wobei das Fluid (34) Wärme an den Kondensator (68) abgibt, der Kondensator (68) angepasst ist, um die Wärme in den Raum (62) abzuleiten, **dadurch gekennzeichnet, dass** die Schleife (32) ferner Folgendes umfasst:
- mindestens zwei Wärmetauscher (72, 74) zum Verdampfen/Kondensieren des Fluids (34), wobei sich jeder der zwei Wärmetauscher (72, 74) jeweils gegen die Innenseite (64) einer der zwei Kühlplatten (56, 58) erstreckt,
jeder der zwei Wärmetauscher (72, 74) umfassend:
- einen ersten Teil (82) in thermischem Kontakt mit jeweils mindestens einer der dissipativen Einrichtungen (30), wobei der erste Teil (82) geeignet und dazu bestimmt ist, Wärme von der mindestens einen der dissipativen Einrichtungen (30) durch Leitung zu erhalten und Wärme durch Konduktion-Konvektion an das Fluid (34) abzugeben, um einen Teil des Fluids (34) zu verdampfen, und
- einen zweiten Teil (84) in thermischem Kontakt mit der Innenseite (64); wobei der zweite Teil (84) geeignet und dazu bestimmt ist, Wärme durch Konduktion-Konvektion von dem Fluid (34) zu erhalten, um einen Teil des Fluids (34) zu kondensieren, wobei der zweite Teil (84) geeignet und dazu bestimmt ist, durch Konduktion Wärme auf die Innenseite (64) zu übertragen.

2. Satellit (10) nach Anspruch 1, der dazu bestimmt ist, in eine geostationäre Umlaufbahn gebracht zu werden, wobei der Satellit (10) eine Nordseite (36) und eine Südseite (38) in Bezug auf die Drehachse der Erde (14) aufweist, wobei die Nordseite (36) und die Südseite (38) jeweils durch die zwei Kühlplatten (56, 58) definiert sind.

3. Satellit (10) nach Anspruch 1 oder 2, wobei die Schleife (32) konfiguriert ist, um eine parallele Zirkulation des Fluids (34) in den zwei Wärmetauschern (72, 74) zu realisieren.

4. Satellit (10) nach einem der Ansprüche 1 bis 3, wobei jeder der zwei Wärmetauscher (72, 74) eine Vielzahl von Kanälen (86) umfasst, die in Reihe und/oder parallel zueinander montiert und angepasst sind, um von dem Fluid (34) durchflossen zu werden, wobei der erste Teil (82) und der zweite Teil (84) von jedem der zwei Wärmetauscher (72, 74) durch Wände (88) der Kanäle (86) gebildet sind.

5. Satellit (10) nach Anspruch 4, wobei mehrere der dissipativen Einrichtungen (30) in thermischem Kontakt mit mehreren der Kanäle (86) von jedem der zwei Wärmetauscher (72, 74) sind.

6. Satellit (10) nach Anspruch 4 oder 5, wobei die Kanäle (86) auf der Innenseite (64) jeder der zwei Kühlplatten (56, 58) verteilt sind.

7. Satellit (10) nach einem der Ansprüche 4 bis 6, wobei die Vielzahl von Kanälen (86) eine Vielzahl von Zweigen (90) umfasst, die parallel zueinander montiert sind, jeder der Zweige (90) einen gewundenen Verlauf auf der Innenseite (64) jeder der zwei Kühlplatten (56, 58) definiert.

8. Satellit (10) nach einem der Ansprüche 1 bis 7, wobei die Schleife (32) mindestens einen Verdampfer (76) umfasst, der angepasst ist, um Wärme an das Fluid (34) abzugeben und einen Teil des Fluids (34) zu verdampfen, wobei die Wärme von mindestens einer der dissipativen Einrichtungen (30) stammt, wobei die mindestens eine der dissipativen Einrichtungen (30) an einem inneren Regal (46, 48) des Satelliten (10) befestigt oder in einer äußeren Antenne (50) des Satelliten enthalten ist.

9. Satellit (10) nach einem der Ansprüche 1 bis 8, wobei das Fluid (34) Ammoniak umfasst.

10. Thermisches Steuerungsverfahren eines Satelliten (10) nach einem der Ansprüche 1 bis 9, umfassend:
- eine Wärmeerzeugung durch die dissipativen Einrichtungen (30),
- eine erzwungene Konvektion des Fluids (34) in der Schleife (32) durch das Pumpsystem (66),
- eine Wärmeleitung von mindestens einer der dissipativen Einrichtungen (30) zu dem ersten Teil von jedem der zwei Wärmetauscher (72, 74),
- eine Wärmeabgabe an das Fluid (34) durch Konduktion-Konvektion durch den ersten Teil (82) von jedem der zwei Wärmetauscher (72, 74) mit Verdampfung eines Teils des Fluids (34), und ein Erhalten von Wärme aus dem Fluid (34) durch Konduktion-Konvektion durch den zweiten Teil (84) von jedem der zwei Wärmetauscher (72, 74) mit Kondensation eines Teils des Fluids (34),
- eine Wärmeleitung von dem zweiten Teil (84) jeder der zwei Kühlplatten (56, 58) zu der Innenseite (64) und von der Innenseite (64) zu der Außenseite (60), und
- eine Wärmestrahlung von der Außenseite (60) jeder der zwei Kühlplatten (56, 58) in den Raum.

## Claims

1. A satellite (10), notably a telecommunications satellite, comprising:
- a plurality of structural panels (26) defining an internal volume (28) of the satellite (10), said plurality comprising at least two radiator panels (56, 58) having an external face (60) able to radiate heat toward space (62), and an internal face (64), the two radiator panels (56, 58) being able to conduct heat from the internal face (64) to the external face (60) and presenting orientations distinct from one another, the orientations being defined respectively by the external face (60),
- dissipative equipment (30) intended to produce heat, and
- a loop (32) for circulation of a refrigerant fluid (34),
the loop (32) comprising:
- at least one pumping system (66) to carry out forced convection of the fluid (34) in the loop (32),
- at least one condenser (68) able to carry out at least partial, preferably total, condensation of the fluid (34), the fluid (34) giving up heat to the condenser (68), the condenser (68) being able to evacuate said heat toward space (62), **characterized in that** the loop (32) further comprises:
- at least two heat exchangers (72, 74) for evaporation-condensation of the fluid (34), each of the two heat exchangers (72, 74) extending respectively against the internal face (64) of one of the two radiator panels (56, 58),
each of the two heat exchangers (72, 74) comprising:
- a first part (82) in thermal contact respectively with at least one of the pieces of dissipative equipment (30), the first part (82) being able to and intended to receive heat from said at least one of the pieces of dissipative equipment (30) by conduction and to give up heat to the fluid (34) by conduction-convection to vaporize a fraction of the fluid (34), and
- a second part (84) in thermal contact with said internal face (64), the second part (84) being able to and intended to receive heat from the fluid (34) by conduction-convection to condense a fraction of the fluid (34), the second part (84) being able to and intended to transmit heat to the internal face (64) by conduction.

2. The satellite (10) according to claim 1, intended to be placed in a geostationary orbit, the satellite (10) having a north face (36) and a south face (38) relative to the rotation axis of the Earth (14), the north face (36) and the south face (38) being defined respectively by the two radiator panels (56, 58).

3. The satellite (10) according to claim 1 or 2, wherein the loop (32) is configured to carry out circulation of the fluid (34) in parallel in the two heat exchangers (72, 74).

4. The satellite (10) according to any one of claims 1 to 3, wherein each of the two heat exchangers (72, 74) comprises a plurality of conduits (86) mounted in series and/or in parallel with one another and able to be traversed by the fluid (34), the first part (82) and the second part (84) of each of the two heat exchangers (72, 74) being formed by walls (88) of the conduits (86).

5. The satellite (10) according to claim 4, wherein several of the pieces of dissipative equipment (30) are in thermal contact with several of the conduits (86) of each of the two heat exchangers (72, 74).

6. The satellite (10) according to claim 4 or 5, wherein the conduits (86) are distributed on the internal face (64) of each of the two radiator panels (56, 58).

7. The satellite (10) according to any one of claims 4 to 6, in which the plurality of conduits (86) comprises several branches (90) mounted in parallel with one another, each of the branches (90) defining a sinuous path on the internal face (64) of each of the two radiator panels (56, 58).

8. The satellite (10) according to any one of claims 1 to 7, wherein the loop (32) comprises at least one evaporator (76) able to give up heat to the fluid (34) and to vaporize a fraction of the fluid (34), the heat coming from at least one of the pieces of dissipative equipment (30), said at least one of the pieces of dissipative equipment (30) being fixed on an internal shelf (46, 48) of the satellite (10) or included in an external antenna (50) of the satellite.

9. The satellite (10) according to any one of claims 1 to 8, wherein the fluid (34) comprises ammonia.

10. A method for the thermal control of a satellite (10) according to any one of claims 1 to 9, comprising:
- production of heat by the dissipative equipment (30),
- forced convection of the fluid (34) in the loop (32) by the pumping system (66),
- conduction of heat from at least one of the pieces of dissipative equipment (30) toward the first part of each of the two heat exchangers (72, 74),
- giving up heat to the fluid (34) by conduction-convection by the first part (82) of each of the two heat exchangers (72, 74) with vaporization of a fraction of the fluid (34), and receiving heat coming from the fluid (34) by conduction-convection by the second part (84) of each of the two heat exchangers (72, 74) with condensation of a fraction of the fluid (34),
- conduction of heat from the second part (84) of each of the two radiator panels (56, 58) to the internal face (64), and from the internal face (64) to the external face (60), and
- radiation of heat by the external face (60) of each of the two radiator panels (56, 58) toward space.
